# EUROPEAN PATENT APPLICATION

(11) **EP 2 123 903 A1**
(43) Date of publication of application: **25.11.2009**
(21) Application number: 08104062.8
(22) Date of filing: 22.05.2008
(51) Int. Cl.: F03B 13/14, F03B 13/18, F03B 13/24

(54) **Device for converting wave energy into electrical energy**

(71) Applicant: Dunias, Paraskevas, 5623 PC Eindhoven (NL); Konings, Monique Josine Janine, 5623 PC Eindhoven (NL)
(72) Inventor: Dunias, Paraskevas, 5623 PC, Eindhoven (NL)
(74) Representative: Verhees, Godefridus Josephus Maria

(57) **Abstract**

A device 1 for converting wave energy into electrical energy comprises a flexible ball 3 fixed at the bottom 5 of the sea 7 and filled with a fluid 9. A tube 11 is connected with a first end 13 to the ball 3. The second end 15 of the tube is in connection with an air pressure chamber 17 which is situated above the sea level.
The device 1 further comprises a generator 19 with an inlet 21, being in connection with the air pressure chamber 17, and an outlet 23. The outlet 23 of the generator 19 is in connection with the outer air. Between the air pressure chamber 17 and the inlet 21 of the generator a first valve 25 is present. The air pressure chamber 17 further has an input opening 29 being in connection with the outer air via a second valve 31.

## Description

### Field of the invention

The present invention relates to a device for converting wave energy into electrical energy comprising: a container which during use being under water and having a wall of which at least a part being flexible and in contact with the surrounding water, said container being filled with a fluid, a tube having a first end connected to the container, an air pressure chamber, being in connection with the second end of the tube, a generator with an inlet and an outlet, a first valve between the second end of the tube and the inlet of the generator, and a second valve being in connection with the second end of the tube.

### Background of the invention

Such a device is known from US-A-3,353,787. The air pressure chamber of this known device is to equalize the fluid pressure and the generator of the known device is a fluid motor. The tubes conduit and fluid motor means comprise an essentially closed system comprising an incompressible fluid. As a wave passes over the container pressure is exerted on the flexible wall so as to cause the fluid to be pushed in the fluid motor.

### Summary of the invention

An object of the present invention is to improve the known device. To this end the device according to the invention is characterized in that the generator is an air turbine of which the inlet is in connection with the air pressure chamber, the first valve being between the air pressure chamber and the inlet of the generator, and the second valve being in connection with the air pressure chamber.

An embodiment of the device according to the invention is characterized in that the device comprises a further air generator, the outlet of which being in connection with the air pressure chamber via the second valve.

Preferably, the entire wall of the container being flexible and being in contact with the surrounding water.

A further embodiment of the device according to the invention is characterized in that the container is constituted by a flexible ball.

Preferably, the air pressure chamber is constituted by a part of the tube near the second end.

Yet a further embodiment of the device according to the invention is characterized in that between the air pressure chamber and the inlet of the generator a venturi is present.

In a preferred embodiment the device comprises at least one further container which is connected via a further tube to the air pressure chamber in order to efficiently use the total capacity of the air turbine.

### Brief description of the drawings

The invention will be elucidated more fully below on the basis of drawings in which embodiments of the device according to the invention are shown. In these drawings:
Figure 1 shows schematically a first embodiment of the device according to the invention; and
Figure 2 shows schematically a second embodiment of the device according to the invention.

### Detailed description of the drawings

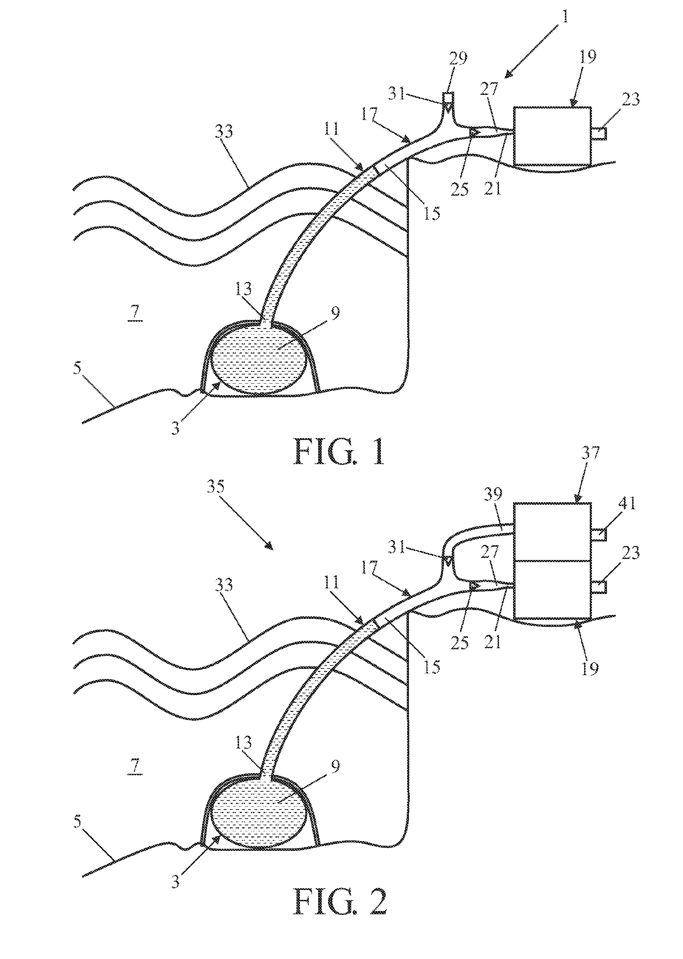

In figure 1 a first embodiment of the device for converting wave energy into electrical energy according to the invention is schematically shown. The device 1 comprises a container constituted by a ball 3 having a flexible wall. The ball is fixed at the bottom 5 of the sea 7 and is filled with a fluid 9, preferably water. A tube 11 is connected with a first end 13 to the ball 3. The second end 15 of the tube is in connection with an air pressure chamber 17. The air pressure chamber 17 is constituted by a part of the tube 11 near the second end 15.

The device 1 further comprises a generator 19 with an inlet 21, being in connection with the air pressure chamber 17, and an outlet 23. The generator 19 is an air turbine of which the outlet 23 is in connection with the outer air. Between the air pressure chamber 17 and the inlet 21 of the generator a first one direction valve 25 is present and between this valve and the inlet of the generator a venturi 27 is present to increase the velocity of the air flow into the generator. The air pressure chamber 17 further has an input opening 29 for taking in air. This input opening 29 is in connection with the outer air via a second one direction valve 31.

When a wave 33 is passing over the ball 3, the induced pressure on the ball will cause a variation of the volume of the ball. When the water column above the ball is increasing due to a wave, the pressure around the ball increases. Because of this, the volume of the ball decreases and the fluid inside the ball is pressed into the tube 11, resulting in an increasing air pressure in the air chamber 17. Comparably, when the water column above the ball is decreasing, the pressure around the ball 3 decreases. Because of this, the volume of the ball increases and the fluid is flows back from the tube 11 into the ball, resulting in sucking the air into the air pressure chamber 17. The variation of the air pressure in the pressure chamber is used to energize the air turbine generating electric energy.

In figure 2 a second embodiment of the device for converting wave energy into electrical energy according to the invention is schematically shown. All components which are identical to those of the first configuration are referred to by the same symbols. This device 35 comprises a further air turbine 37 of which the outlet 39 is connected to the air chamber 17 via the second valve 31. The inlet 41 of this further air turbine is in connection with the outer air. With this device also by sucking air into the air chamber 17 electrical power is generated.

Although in the above the invention is explained on the basis of the drawings, it should be noted that the invention is in no way limited to the embodiments shown in the drawings. The invention also extends to all embodiments deviating from the embodiments shown in the drawings within the context of the claims. For example the device may comprise more flexible balls with tubes connected to it. The tubes all being in connection with the air pressure chamber. In this way the air flow to the air turbine is increased substantially which will increase the total energy produced. Depending on the energy demand, the network of reservoirs can be accordingly extended.

## Claims

1. Device for converting wave energy into electrical energy comprising:
- a container which during use being under water and having a wall of which at least a part being flexible and in contact with the surrounding water, said container being filled with a fluid,
- a tube having a first end connected to the container,
- an air pressure chamber, being in connection with the second end of the tube, and
- a generator with an inlet and an outlet, the inlet of which being in connection with the second end of the tube,
- a first valve between the second end of the tube and the inlet of the generator, and
- a second valve being in connection with the second end of the tube,
**characterized in that**
- the generator is an air turbine of which the inlet is in connection with the air pressure chamber,
- the first valve being between the air pressure chamber and the inlet of the generator, and
- the second valve being in connection with the air pressure chamber.

2. Device according to claim 1, **characterized in that** the device comprises a further air generator, the outlet of which being in connection with the air pressure chamber via the second valve.

3. Device according to claim 1 or 2, **characterized in that** substantially the entire wall of the container being flexible and being in contact with the surrounding water.

4. Device according to claim 3, **characterized in that** the container is constituted by a flexible ball.

5. Device according to one of the preceding claims, **characterized in that** the air pressure chamber is constituted by a part of the tube near the second end.

6. Device according to one of the preceding claims, **characterized in that** between the air pressure chamber and the inlet of the generator a venturi is present.

7. Device according to one of the preceding claims, **characterized in that** the device comprises at least one further container which is connected via a further tube to the air pressure chamber.
